# EUROPEAN PATENT SPECIFICATION

(11) **EP 4 082 352 B1**
(45) Date of publication and mention of the grant of the patent: **24.01.2024**
(21) Application number: 22168992.0
(22) Date of filing: 20.04.2022
(51) Int. Cl.: A23G 1/20, A23G 1/00, A23G 3/34, A23G 3/02

(54) **MACHINE FOR PRODUCING A FILLED FOODSTUFF PRODUCT**
MASCHINE ZUR HERSTELLUNG EINES GEFÜLLTEN LEBENSMITTELPRODUKTS
MACHINE POUR PRODUIRE UN PRODUIT ALIMENTAIRE FOURRÉ

(30) Priority: 27.04.2021 IT 202100010550
(43) Date of publication of application: 02.11.2022
(73) Proprietor: Selmi S.r.l., 12042 Pollenzo BRA (CN) (IT)
(72) Inventor: SELMI, Paolo, 12042 BRA (Cuneo) (IT)
(74) Representative: Frontoni, Stefano

(56) References cited:
- EP-A1- 0 931 462
- EP-A1- 1 825 760
- EP-A1- 2 967 115
- DE-B- 1 077 519
- US-A- 2 850 990

## Description

The present invention relates to a machine for producing a filled foodstuff product, comprising:
- a first container for receiving a first foodstuff material;
- a second container for receiving a second foodstuff material or else a connection unit for connecting a second container, containing the second material, to the machine;
- a dispensing unit comprising at least one dispensing nozzle, where the dispensing nozzle comprises a first outlet and a second outlet, which is external to the first outlet and surrounds the first outlet;
- at least one valve unit for controlling a flow of the first material to the first outlet and a flow of the second material to the second outlet; and
- a control unit for controlling the at least one valve unit so as to enable, one at a time or simultaneously, a flow of material through the first outlet and a flow of material through the second outlet.

Machines of the type referred to above are, for example, the so-called one-shot dispensing machines.

In general, machines of the type in question are characterized in that they make it possible to produce the filled product in a single dispensing step during which the material that comes to constitute the filling and the material that comes to constitute the outer shell are dispensed simultaneously into the mould, at least for a given interval of the dispensing phase. Usually, in known processes initially just the material of the shell is dispensed, then the two materials of the filling simultaneously, and, finally, again just the material of the shell.

The type of machine in question is normally used for producing filled chocolate products, for example pralines. Machines of the type are known from e.g. EP 1 825 760 A1, DE 10 77 519 B, US 2 850 990 A, EP 2 967 115 A1, EP 0 931 462 A1.

In this context, the object of the present invention is to provide a machine for producing filled foodstuff products that present new functions so as to be more versatile and be able to operate in new production sectors.

The object referred to is achieved via a machine that presents the characteristics forming the subject of claim 1.

The claims form an integral part of the technical teaching provided herein.

Further characteristics and advantages of the invention will emerge clearly from the ensuing description with reference to the annexed drawings, which are provided purely by way of non-limiting example and in which:
- Figure 1 is a schematic illustration of an example of machine for producing filled foodstuff products according to the present invention;
- Figure 2 illustrates a valve unit of the machine of Figure 1 according to an axonometric view;
- Figures 3A, 3B show a cross-sectional view of the valve unit of Figure 2, in two different respective operating conditions.

In the ensuing description, various specific details are illustrated aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and consequently do not define the sphere of protection or the scope of the embodiments.

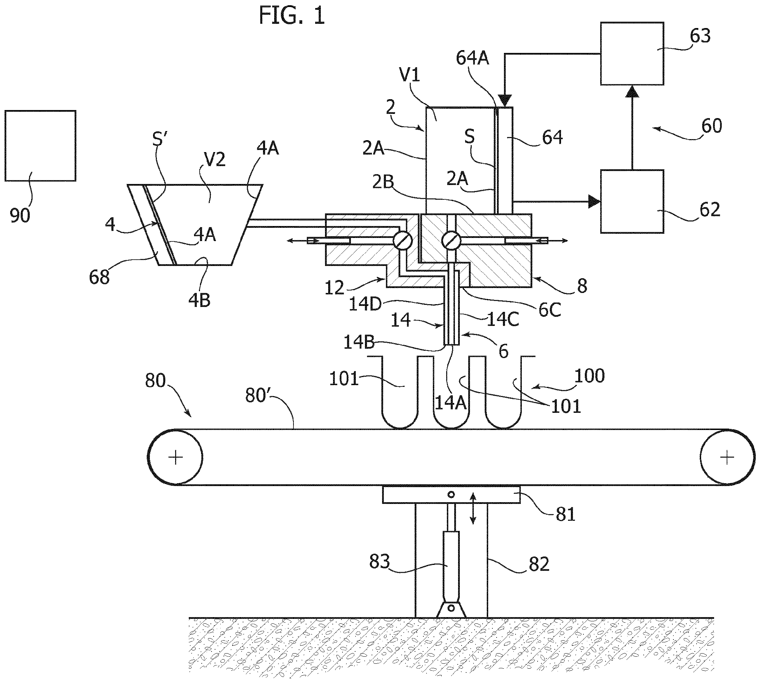

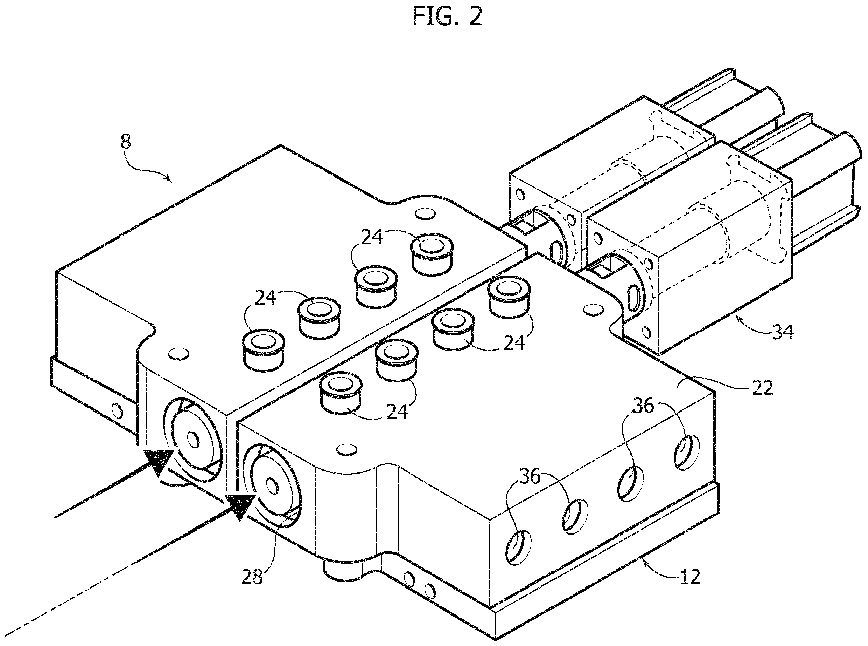

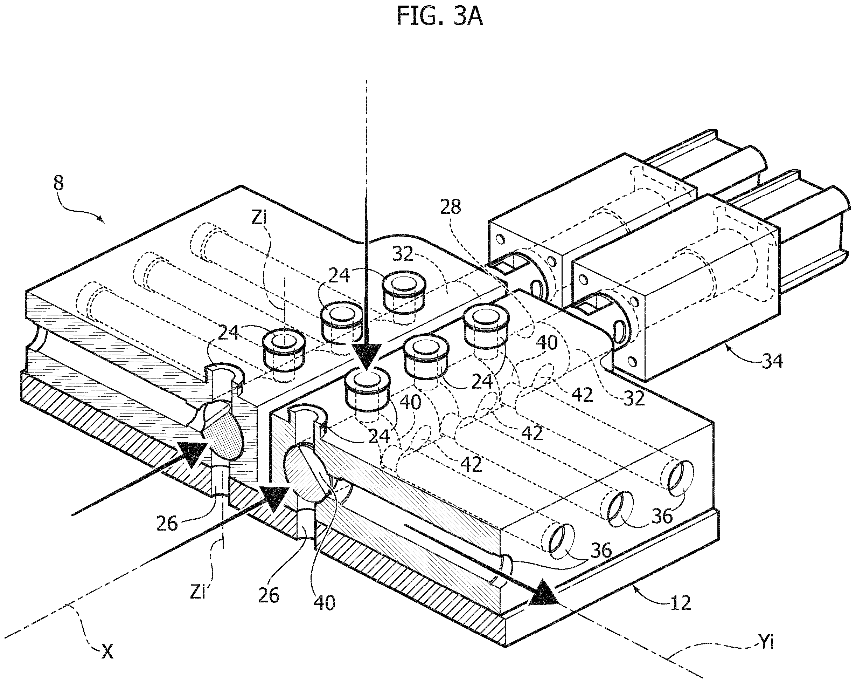

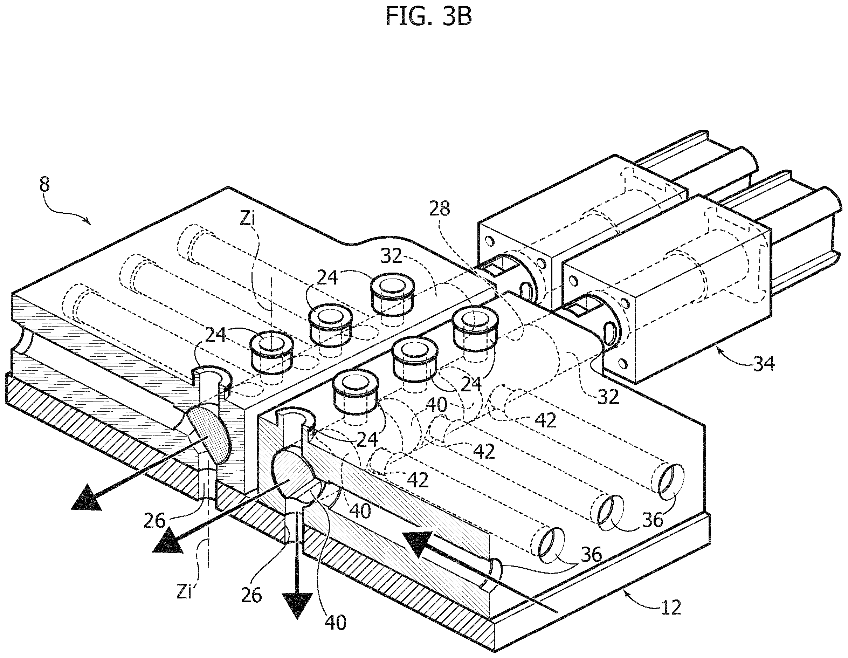

With reference to Figures 1 to 3B, the machine described herein, designated as a whole by the reference number 10, comprises:
- a first container 2 for receiving a first foodstuff material;
- a second container 4 for receiving a second foodstuff material;
- a dispensing unit 6 for dispensing the first and second materials contained in the containers 2 and 4; and
- a first valve unit 8 for controlling a flow of the first material to the dispensing unit 6 and a second valve unit 12 for controlling a flow of the second material to the dispensing unit 6.

In one or more preferred embodiments, such as the one illustrated, the dispensing unit 6 comprises a series of nozzles 14. These nozzles project underneath from a structure 6C of the unit 6, by which they are carried.

Each nozzle 14 comprises a first outlet 14A and a second outlet 14B, which is external to the first outlet 14A and surrounds it.

For instance, in one or more preferred embodiments, such as the one illustrated, the nozzle 14 comprises a first tubular duct 14C and a second tubular duct 14D, which is coaxial with respect to the first duct 14C and is arranged on the outside so as to surround the first duct 14C. The bottom end of the first duct 14C defines the aforesaid first outlet 14A. On the other hand, the opening provided between the bottom end of the duct 14C and the bottom end of the second duct 14D defines the aforesaid second outlet 14B.

The number of nozzles 14 may vary according to the requirements of the specific applications.

In one or more preferred embodiments, such as the one illustrated, each of the two valve units 8, 12 comprises a block 22 that defines, at the top, a series of inlet mouths 24 and, underneath, a series of outlet mouths 26, preferably aligned to the mouths 24 vertically, in respective directions Ti.

The number of the mouths 24, 26 is a function of the number of nozzles 14. Preferably, the two series of the mouths 24, 26 extend in a direction X in a horizontal plane of the block 22.

Within the block 22, between the inlet mouths 24 and the outlet mouths 26, a cylindrical seat 28 is provided, within which an open/close member 32 having a corresponding shape is mounted mobile. In particular, the seat 28 extends horizontally in the same direction X as that in which the mouths 24 and 26 are aligned.

The open/close member 32 is axially mobile, in translation, in the same direction X, driven by a motorized linear actuator 34.

Moreover, the block 22 has a series of cylindrical chambers 36 that extend horizontally in respective directions Yi, orthogonal to the direction X, and each give out into the cylindrical seat 28 in a position in which a respective pair of the mouths 24 and 26 is located.

Set within each chamber 36 is a piston (not illustrated) that is mobile in the direction Yi according to a reciprocating motion of translation, as will be seen in what follows.

The open/close member 32 has on its outer surface a series of pairs of recesses 40, 42, each positioned at a respective pair of the mouths 24, 26.

With reference to a single pair, the recess 40 is designed to set in communication the inlet mouth 24 and the collection chamber 36, whereas the recess 42 is designed to set in communication the collection chamber 36 and the outlet mouth 26.

Preferably, the recesses 40, 42 have a limited depth that never reaches the geometrical axis of the open/close member 32. Once again preferably, the recesses 40, 42 are obtained via milling in a cutting plane secant with respect to the circular profile of the cross section of the member 32.

In one or more preferred embodiments, such as the one illustrated, the recesses 40, 42 have two different orientations about the geometrical axis of the open/close member 32, preferably offset by approximately 90°. It will be noted that in the configuration illustrated the cutting plane by which each of the two recesses 40, 42 is defined is inclined by 45° with respect to the horizontal axis of the corresponding chamber 36 (i.e., with respect to the direction Yi in which the aforesaid chamber extends).

Operation of the valve unit, 8 or 12, envisages setting the open/close member 32 in a first position in which the recesses 40 are brought up to the inlet mouths 24, setting the latter in communication with the collection chambers 36.

At this point, the pistons internal to the chambers 36 perform a travel in the direction opposite to the open/close member 32 to draw the material contained in the container 2 or 4 into the chambers 36 themselves.

Next, the open/close member 32 is shifted into a second position in which the recesses 42 are brought up to the outlet mouths 26, setting the latter in communication with the collection chambers 36.

Next, the pistons are once again driven in a travel in the direction opposite to the previous one, towards the open/close member 32, to push the material out of the collection chambers 36 and send it to the nozzles 14 of the dispensing unit 6.

The material drawn from the container 2 is fed to the outlets 14A of the nozzles 14, whereas the material drawn from the container 4 is fed to the outlets 14B.

The dispensing operation performed by the machine envisages that the first and second materials will be dispensed through the outlets 14A and 14B, respectively, preferably, first just the second material, then simultaneously the first and second materials, and finally just the second material, so as to form within a cavity of a mould an inner body, i.e., a filling, made of the first material and an outer shell made of the second material, which coats the inner body.

The machine 10 comprises a control unit 90 configured for controlling the actuators 34 of the two valve units 8, 12 in a synchronized way to implement the dispensing process described above.

Preferably, the dispensing unit 6 is vertically mobile to raise, during the dispensing step, the nozzles 14 with respect to the mould in which the two materials are dispensed. For this purpose, the machine 10 comprises an actuator (not illustrated) prearranged for driving the vertical movement of the dispensing unit 6.

In operation, the dispensing unit 6 sets itself initially in a lowered position, where the nozzles 14 are set within the cavity of the mould and up against the corresponding bottom.

With the nozzles 14 in the above position, the dispensing step is started, and the nozzles 14 are then raised gradually following the rate of filling of the cavity of the mould.

For the reasons mentioned in what follows, preferably the collection chamber 36 and the corresponding piston of the valve unit 8 have a diameter greater than the diameter of the homologous components of the valve unit 12.

According to an important feature of the present invention, the machine 10 comprises a cooling unit 60 for cooling an inner surface S of the container 2 so as to cool or refrigerate the material contained therein.

In one or more preferred embodiments, such as the one illustrated, the cooling unit 60 comprises a refrigerating circuit operating with a refrigerant.

Preferably, the refrigerant includes a refrigerant gas, for example R452A and, even more preferably, a mixture of water and glycol.

In one or more preferred embodiments, such as the one illustrated, the refrigerating circuit comprises, in particular, a compressor 62, an evaporator 63, and a heat-exchange unit 64. The heat-exchange unit 64 is prearranged to set the refrigerant in a condition of heat exchange with the inner surface S of the container 2. The heat-exchange unit 64 comprises an inner region (not visible) that is traversed by one or more ducts of the circuit of the refrigerant and an outer wall 64A in heat exchange with the aforesaid ducts.

In one or more preferred embodiments, such as the one illustrated, the container 2 comprises side walls 2A and a bottom 2B that delimit a chamber V1 for receiving the material. The heat-exchange unit 64 is mounted in direct contact with one of the side walls 2A. In particular, the outer wall 64A of the unit 64 is set in direct contact with the side wall 2A that defines the inner surface S.

The cooling unit 60 is prearranged for maintaining the material contained in the container 2 at a temperature below 10°C.

Thanks to the cooling unit 60, the machine 10 is able to dispense cold fillings for the preparation of cold or frozen foodstuff products, for example ice-creams, without the need for external systems for producing cold, which are usually absent in production contexts of small dimensions, such as production facilities for homemade products or small industrial facilities.

It should now be noted that the fact that the diameter of the collection chamber 36 and of the corresponding piston of the valve unit 8 is oversized with respect to the valve unit 12 facilitates dispensing of cold materials that are highly viscous and moreover enables supply at high flowrate to obtain inner bodies, i.e., fillings, that have as a whole a volume considerably greater than the volume of material of the outer shell.

Thanks to the above characteristics, the dispensing machine 10 is particularly advantageous for being used for the production of ice-creams on a stick.

Moreover, in one or more preferred embodiments, the machine 10 further comprises a heating unit 68 for heating an inner surface S' of the container 4 and/or of the ducts that convey the material from the container 4 to the nozzles 14 of the dispensing unit 6.

In one or more preferred embodiments, the heating unit 68 comprises at least one electrical resistance.

In one or more preferred embodiments, the container 4 comprises side walls 4A and a bottom 4B that delimit a chamber V2 for receiving the material. The heating unit 68 may comprise at least one electrical resistance set in a condition of heat exchange with the bottom 4B and/or with at least one of the side walls 4A. As an alternative or in addition, the heating unit 68 may comprise at least one electrical resistance set in a condition of heat exchange with one or more ducts that convey the material from the container 4 to the nozzles 14.

In the container 4, the machine 10 may contain material that needs to be kept at a temperature higher than room temperature for being dispensed in the way described above. For instance, the container 4 may contain chocolate in the molten state.

In one or more preferred embodiments, such as the one illustrated, the machine 10 further comprises a conveyor 80 that is positioned underneath the dispensing unit 6 and is prearranged for supplying in succession a plurality of moulds 100 underneath the dispensing unit 6 to carry out the process of dispensing into the cavities 101 of the moulds 100. Preferably, the conveyor 80 is a conveyor belt that follows a closed-loop path.

In one or more preferred embodiments, such as the one illustrated, the conveyor 80 is vertically adjustable to vary the vertical distance between its conveying plane 80' and the structure 6C from which the nozzles 14 project.

The above adjustment enables the machine 10 to operate in a wide range of applications in which the products to be made have heights considerably different from one application to another.

In one or more preferred embodiments, such as the one illustrated, the conveyor 80 is carried by a slide 81, which is vertically mobile on a guide frame 82 and is driven by an actuator 83.

In one embodiment, the vertical movement of the conveyor 80 may also be used for enabling relative movement between the dispensing unit 6 and the mould for forming the product, described previously.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

For instance, it may be noted that the dispensing machine described herein may be without the second container and envisage, instead, a unit for connecting an external container to the machine, i.e., in particular to the valve unit 12. In a preferred embodiment, the connection unit in question is prearranged for connecting the machine described herein to a chocolate-tempering machine.

## Claims

1. A machine for producing a filled foodstuff product, comprising:
- a first container (2) for receiving a first foodstuff material;
- a second container (4) for receiving a second foodstuff material or else a connection unit for connecting a second container, containing the second material, to the machine;
- a dispensing unit (6) comprising at least one dispensing nozzle (14), in which the dispensing nozzle comprises a first outlet (14A) and a second outlet (14B) that is external to the first outlet (14A) and surrounds it;
- at least one valve unit (8, 12) for controlling a flow of the first material to the first outlet (14A) and a flow of the second material to the second outlet (14B);
- a control unit (90) for controlling the at least one valve unit for providing, one at a time or simultaneously, a flow of material through the first outlet (14A) and a flow of material through the second outlet (14B);
the machine being **characterized in that** it comprises a cooling unit (60) for cooling an inner surface (S) of the first container (2) so as to cool or refrigerate the first material.

2. The machine according to claim 1, wherein the cooling unit (60) comprises a refrigerating circuit operating with a refrigerant, which comprises a compressor (62), an evaporator (63) and a heat-exchange unit (64) for setting the refrigerant in a condition of heat exchange with the inner surface (S) of the first container (2).

3. The machine according to claim 2, wherein the first container (2) comprises a series of side walls (2A) and a bottom (2B) that delimit a chamber (V1) for receiving the first material, wherein one of the side walls defines the inner surface (S) cooled by the cooling unit (60), and wherein the heat-exchange unit (64) is mounted in direct contact with the above wall.

4. The machine according to any one of the preceding claims, comprising a first valve unit (8) for controlling a flow of the first material to the first outlet (14A) and a second valve unit (12) for controlling a flow of the second material to the second outlet (14B),
wherein each valve unit comprises:
- at least one collection chamber (36) for collection of the first material or of the second material, where a piston is mobile within the collection chamber (36), in a first direction for drawing the first or the second material from the first container (2) to the collection chamber (36) and in a second, opposite, direction for conveying the first or the second material from the collection chamber (36) to the first outlet (14A) or the second outlet (14B);
- an open/close member (32) mobile between a first position, where the collection chamber (36) is set in communication with the first container (2) or the second container (4), and a second position, where the collection chamber (36) is set in communication with the first outlet (14A) or the second outlet (14B).

5. The machine according to claim 4, wherein the collection chamber (36) and the corresponding piston of the first valve unit (8) have a diameter greater than the diameter of the collection chamber (36) and of the corresponding piston of the second valve unit (12).

6. The machine according to claim 4 or claim 5, wherein the open/close member (32) at least of the first valve unit (8) has a cylindrical conformation and is set within a corresponding cylindrical seat (28), and wherein on the outer surface of the open/close member (32) at least one first recess (40) and at least one second recess (42) are provided in different positions along the geometrical axis of the open/close member, and wherein the open/close member (32) is mobile along its geometrical axis between the first position, where the first recess (40) sets in communication the collection chamber (36) with the first container (2), and the second position, where the second recess (42) sets in communication the collection chamber (36) with the first outlet (14A).

7. The machine according to any one of the preceding claims, comprising a conveyor (80) positioned underneath the dispensing unit (6) and prearranged for supplying in succession a plurality of moulds (101) underneath the dispensing unit (6).

8. The machine according to claim 7, wherein the conveyor (80) is vertically adjustable to vary the vertical distance between a conveying plane of the conveyor (80) and the dispensing unit (6).

## Patentansprüche

1. Maschine zur Herstellung eines gefüllten Lebensmittelprodukts, umfassend:
- einen ersten Behälter (2) zur Aufnahme eines ersten Lebensmittelmaterials;
- einen zweiten Behälter (4) zur Aufnahme eines zweiten Lebensmittelmaterials oder eine Anschlusseinheit zum Anschluss eines zweiten Behälters, der das zweite Material enthält, an die Maschine;
- eine Ausgabeeinheit (6) mit mindestens einer Ausgabedüse (14), wobei die Ausgabedüse einen ersten Auslass (14A) und einen zweiten Auslass (14B) aufweist, der sich außerhalb des ersten Auslasses (14A) befindet und diesen umgibt;
- mindestens eine Ventileinheit (8, 12) zur Steuerung eines Stroms des ersten Materials zum ersten Auslass (14A) und eines Stroms des zweiten Materials zum zweiten Auslass (14B);
- eine Steuereinheit (90) zum Steuern der mindestens einen Ventileinheit, um jeweils oder gleichzeitig einen Materialfluss durch den ersten Auslass (14A) und einen Materialfluss durch den zweiten Auslass (14B) bereitzustellen;
wobei die Maschine **dadurch gekennzeichnet ist, dass** sie eine Kühleinheit (60) zum Kühlen einer Innenfläche (S) des ersten Behälters (2) umfasst, um das erste Material zu kühlen oder abzukühlen.

2. Maschine nach Anspruch 1, wobei die Kühleinheit (60) einen Kühlkreislauf umfasst,
die mit einem Kältemittel arbeitet und einen Kompressor (62), einen Verdampfer (63) und eine Wärmeaustauscheinheit (64) umfasst, um das Kältemittel in einen Zustand des Wärmeaustausches mit der Innenfläche (S) des ersten Behälters (2) zu versetzen.

3. Maschine nach Anspruch 2, wobei der erste Behälter (2) eine Reihe von Seitenwänden (2A) und einen Boden (2B) umfasst, die eine Kammer (VI) zur Aufnahme des ersten Materials begrenzen, wobei eine der Seitenwände die von der Kühleinheit (60) gekühlte Innenfläche (S) definiert und wobei die Wärmeaustauscheinheit (64) in direktem Kontakt mit der oben genannten Wand montiert ist.

4. Maschine nach einem der vorhergehenden Ansprüche, mit einer ersten Ventileinheit (8) zur Steuerung eines Flusses des ersten Materials zum ersten Auslass (14A) und einer zweiten Ventileinheit (12) zur Steuerung eines Flusses des zweiten Materials zum zweiten Auslass (14B),
wobei jede Ventileinheit umfasst:
- mindestens eine Sammelkammer (36) zum Sammeln des ersten Materials oder des zweiten Materials, wobei ein Kolben innerhalb der Sammelkammer (36) beweglich ist, und zwar in einer ersten Richtung, um das erste oder das zweite Material aus dem ersten Behälter (2) in die Sammelkammer (36) zu ziehen, und in einer zweiten, entgegengesetzten Richtung, um das erste oder das zweite Material von der Sammelkammer (36) zum ersten Auslass (14A) oder zum zweiten Auslass (14B) zu befördern;
- ein Öffnungs-/Schließteil (32), das zwischen einer ersten Position, in der die Sammelkammer (36) in Verbindung mit dem ersten Behälter (2) oder dem zweiten Behälter (4) steht, und einer zweiten Position, in der die Sammelkammer (36) in Verbindung mit dem ersten Auslass (14A) oder dem zweiten Auslass (14B) steht, beweglich ist.

5. Maschine nach Anspruch 4, wobei die Sammelkammer (36) und der entsprechende Kolben der ersten Ventileinheit (8) einen größeren Durchmesser aufweisen als der Durchmesser der Sammelkammer (36) und des entsprechenden Kolbens der zweiten Ventileinheit (12).

6. Maschine nach Anspruch 4 oder Anspruch 5, wobei das Öffnungs-/Schließteil (32) zumindest der ersten Ventileinheit (8) eine zylindrische Form aufweist und in einen entsprechenden zylindrischen Sitz (28) eingesetzt ist, und wobei auf der Außenfläche des Öffnungs-/Schließteils (32) mindestens eine erste Aussparung (40) und mindestens eine zweite Aussparung (42) in verschiedenen Positionen entlang der geometrischen Achse des Öffnungs-/Schließteils vorgesehen sind, und wobei das Öffnungs-/Verschlusselement (32) entlang seiner geometrischen Achse zwischen der ersten Position, in der die erste Ausnehmung (40) die Sammelkammer (36) mit dem ersten Behälter (2) in Verbindung setzt, und der zweiten Position, in der die zweite Ausnehmung (42) die Sammelkammer (36) mit dem ersten Auslass (14A) in Verbindung setzt, beweglich ist.

7. Maschine nach einem der vorhergehenden Ansprüche, mit einem unterhalb der Ausgabeeinheit (6) angeordneten Förderer (80), der dazu eingerichtet ist, eine Vielzahl von Formen (101) nacheinander unterhalb der Ausgabeeinheit (6) zuzuführen.

8. Maschine nach Anspruch 7, wobei der Förderer (80) vertikal verstellbar ist, um den vertikalen Abstand zwischen einer Förderebene des Förderers (80) und der Ausgabeeinheit (6) zu variieren.

## Revendications

1. Machine pour produire un produit alimentaire fourré, comprenant :
- un premier contenant (2) destiné à recevoir un premier aliment ;
- un deuxième contenant (4) destiné à recevoir un deuxième aliment ou une unité de raccordement destinée à relier un deuxième contenant, qui contient le deuxième aliment, à la machine ;
- une unité de distribution (6) comprenant au moins une buse de distribution (14), dans laquelle la buse de distribution comprend une première évacuation (14A) et une deuxième évacuation (14B) qui est externe à la première évacuation (14A) et qui l'entoure ;
- au moins une vanne (8, 12) destinée à contrôler un flux du premier aliment vers la première évacuation (14A) et un flux du deuxième aliment vers la deuxième évacuation (14B) ;
- une unité de commande (90) destinée à contrôler la au moins une vanne afin de fournir, un par un ou en même temps, un flux d'aliment par le biais de la première évacuation (14A) et un flux d'aliment par le biais de la deuxième évacuation (14B) ;
la machine étant **caractérisée en ce qu'**elle comprend une unité de refroidissement (60) destinée à refroidir une surface interne (S) du premier contenant (2) de façon à refroidir ou réfrigérer le premier aliment.

2. Machine selon la revendication 1, dans laquelle l'unité de refroidissement (60) comprend un circuit réfrigérant qui fonctionne avec un réfrigérant, qui comprend un compresseur (62), un évaporateur (63) et une unité d'échange thermique (64) destinée à placer le réfrigérant dans un état d'échange thermique avec la surface interne (S) du premier contenant (2).

3. Machine selon la revendication 2, dans laquelle le premier contenant (2) comprend une série de parois latérales (2A) et un fond (2B) qui délimite une chambre (V1) destinée à recevoir le premier aliment, dans laquelle l'une des parois latérales définit la surface interne (S) refroidie par l'unité de refroidissement (60), et dans laquelle l'unité d'échange thermique (64) est installée en contact direct avec la paroi ci-dessus.

4. Machine selon l'une quelconque des revendications précédentes, comprenant une première vanne (8) destinée à contrôler un flux du premier aliment vers la première évacuation (14A) et une deuxième vanne (12) destinée à contrôler un flux du deuxième aliment vers la deuxième évacuation (14B),
dans laquelle chaque vanne comprend :
- au moins une chambre de collecte (36) destinée à collecter le premier aliment ou le deuxième aliment, dans laquelle un piston est mobile dans la chambre de collecte (36), dans une première direction afin d'attirer le premier ou le deuxième aliment du premier contenant (2) vers la chambre de collecte (36) et dans une deuxième direction opposée afin d'acheminer le premier ou le deuxième aliment de la chambre de collecte (36) vers la première évacuation (14A) ou la deuxième évacuation (14B) ; et
- un élément d'ouverture/de fermeture (32) mobile entre une première position, dans laquelle la chambre de collecte (36) est placée en communication avec le premier contenant (2) ou le deuxième contenant (4), et une deuxième position, dans laquelle la chambre de collecte (36) est placée en communication avec la première évacuation (14A) ou la deuxième évacuation (14B).

5. Machine selon la revendication 4, dans laquelle la chambre de collecte (36) et le piston correspondant de la première vanne (8) possèdent un diamètre supérieur au diamètre de la chambre de collecte (36) et du piston correspondant de la deuxième vanne (12).

6. Machine selon la revendication 4 ou 5, dans laquelle l'élément d'ouverture/de fermeture (32) au moins de la première vanne (8) présente une conformation cylindrique et est placé dans un siège cylindrique correspondant (28), et dans laquelle, sur la surface externe de l'élément d'ouverture/de fermeture (32), au moins un premier renfoncement (40) et au moins un deuxième renfoncement (42) sont prévus à des emplacements différents le long de l'axe géométrique de l'élément d'ouverture/de fermeture, et dans laquelle l'élément d'ouverture/de fermeture (32) est mobile le long de sin axe géométrique entre le premier emplacement, auquel le premier renfoncement (40) place en communication la chambre de collecte (36) avec le premier contenant (2), et le deuxième emplacement, auquel le deuxième renfoncement (42) place en communication la chambre de collecte (36) avec la première évacuation (14A).

7. Machine selon l'une quelconque des revendications précédentes, comprenant un convoyeur (80) positionné sous l'unité de distribution (6) et prédisposé pour fournir successivement une pluralité de moules (101) sous l'unité de distribution (6).

8. Machine selon la revendication 7, dans laquelle le convoyeur (80) est réglable à la verticale afin de faire varier la distance verticale entre un plan d'acheminement du convoyeur (80) et l'unité de distribution (6).
